# FASCICULE DE BREVET EUROPEEN

(11) **EP 2 126 926 B1**
(45) Date de publication et mention de la délivrance du brevet: **05.11.2014**
(21) Numéro de dépôt: 07871813.7
(22) Date de dépôt: 07.12.2007
(51) Int. Cl.: G21C 3/07, C22C 16/00

(54) **PROCEDE DE CONCEPTION D'UN ASSEMBLAGE DE COMBUSTIBLE OPTIMISE EN FONCTION DES CONTRAINTES D'UTILISATION EN REACTEUR NUCLEAIRE A EAU LEGERE**
ENTWURFVERFAHREN ZUR OPTIMIERUNG EINER BRENNSTOFFANORDNUNG IN ABHÄNGIGKEIT VON DER AUFTRETENDEN ZUGSPANNUNGEN IM LEICHTWASSERKERNREAKTOR
METHOD FOR DESIGNING A FUEL ASSEMBLY OPTIMISED AS A FUNCTION FO THE CONDITIONS OF USE IN LIGHT WATER NUCLEAR REACTORS

(30) Priorité: 11.12.2006 FR 0610785
(43) Date de publication de la demande: 02.12.2009
(73) Titulaire: Areva NP, 92400 Courbevoie (FR)
(72) Inventeur: BARBERIS, Pierre, F-73400 Ugine (FR); REBEYROLLE, Véronique, F-74410 Duingt (FR); VERMOYAL, Jean-Jérôme, F-69380 Chasselay (FR)
(74) Mandataire: Domenego, Bertrand
(86) Numéro de dépôt international: PCT/FR2007/002018
(87) Numéro de publication internationale: WO 2008/090269

(56) Documents cités:
- EP-A- 0 399 223
- EP-A- 0 802 264
- EP-A- 1 688 508
- FR-A- 2 769 637
- JP-A- 10 273 746
- JP-A- 11 286 736
- US-A- 5 972 288
- BRADLEY, E. ROSS ET AL: "Zirconium in the Nuclear Industry: Eleventh International Symposium. (ASTM Symposium on Zirconium in the Nuclear Industry, held in September 1995, in Garmisch-Partenkirchen, Germany.) [In: ASTM Spec. Tech. Publ., 1996; STP 1295]" 1996, PUBLISHER: (ASTM, PHILADELPHIA, PA.), PP. 12-32 , XP002457537 page 16

## Description

L'invention concerne la conception des assemblages de combustible pour réacteurs nucléaires à eau légère.

Dans un coeur de réacteur nucléaire à eau bouillante (REB) ou à eau pressurisée (REP), les composants en alliage de zirconium des assemblages de combustible sont soumis à de sévères sollicitations qui entraînent leur déformation. Les principaux composants concernés sont les grilles de mélange, les tubes-guides, les gaines contenant les pastilles de combustible et les boîtiers.

La déformation des composants de structure de l'assemblage peut provoquer de nombreux problèmes d'exploitation. Par exemple, en fonctionnement, la déformation d'ensemble de l'assemblage, provoquée essentiellement par celle des tubes-guides ou du boîtier, peut gêner la manoeuvre des grappes de commande qui permettent le pilotage du réacteur. Ou encore, pendant les opérations de chargement et de déchargement du coeur du réacteur, les déformations des composants tels que les grilles ou le boîtier augmentent les frottements et les risques d'accrochage. Cela amène souvent l'exploitant à réduire les vitesses de manutention, accroissant ainsi la durée d'indisponibilité du réacteur. De même, au-delà d'un certain seuil, la déformation des composants ne leur permet plus d'assurer leur fonction en toute sécurité, et peut conduire l'exploitant à décharger prématurément l'assemblage de combustible concerné.

Les sollicitations auxquelles ces composants sont soumis sont essentiellement :
- la température,
- les contraintes mécaniques qui sont susceptibles de provoquer le fluage des composants ;
- la corrosion par l'eau circulant dans le réacteur ;
- l'hydruration ;
- l'irradiation par le flux neutronique, qui entraîne des phénomènes de grandissement (croissance libre) et accentue la corrosion.

Les choix des matériaux utilisés pour réaliser les composants de structure de l'assemblage et de leur dimensionnement doivent tenir compte de toutes ces sollicitations. Différentes classes d'alliages de zirconium ont été développées à cet effet mais le choix d'un matériau reste empirique, conduisant souvent à utiliser un même alliage pour des composants différents tels que les grilles de mélange et les tubes-guides (REP) ou les boîtiers (REB) alors même que ceux-ci ne sont pas soumis aux mêmes sollicitations.

Le but de l'invention est de proposer un procédé permettant d'optimiser le choix des matériaux utilisés pour réaliser les différents composants de structure de l'assemblage de combustible en fonction des conditions spécifiques de fonctionnement du réacteur ou de la famille de réacteurs considérés afin de minimiser la déformation totale des composants. Il s'agit donc de définir la composition chimique des alliages de Zr utilisés pour réaliser les différents composants de structure de l'assemblage de combustible qui permettront d'atteindre les performances attendues par l'exploitant, en termes de manoeuvrabilité, de facilité d'exploitation, de durée de vie... Des alliages à base de Zr pour composants d'un assemblage de combustible sont connus par example du document EP 0802264.

A cet effet, l'invention a pour objet un procédé de conception d'un assemblage de combustible pour réacteur nucléaire à eau légère comportant des composants de structure en alliage de zirconium, caractérisé en ce que :
- on calcule les contraintes uniaxiales moyennes de traction ou de compression auxquelles seront soumis lesdits composants pendant la vie de l'assemblage;
- et on choisit les alliages de zirconium dans lesquels lesdits composants seront réalisés selon le critère suivant :
   * ceux soumis à une contrainte de compression axiale ou travers σ comprise entre -10 et -20MPa seront réalisés en un alliage dont la teneur en éléments autres que Zr ne dépasse pas 5%, et dont la teneur en Sn est comprise entre Sn = (-0,025.σ - 0,25) % et Sn = -0,05.σ %
   * ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,05.σ + 1) %
   * ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05.σ % et Sn = (0,07.σ + 1) %
   * ceux soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 % et 1,70 %.

De préférence :
- au moins certains desdits composants soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05. σ% et Sn = (0,025. σ + 1)% ;
- au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50% et 1,25%.

De préférence lesdits alliages de zirconium dans lesquels lesdits composants seront réalisés sont choisis selon les critères suivants :
- pour les composants se trouvant à l'état entièrement recristallisé, ou recristallisé à plus de 50% :
   * ceux soumis à une contrainte de compression axiale ou travers σ comprise entre -10 et -20MPa seront réalisés en un alliage dont la teneur en éléments autre que Zr ne dépasse pas 5%, et dont la teneur en Sn est comprise entre Sn = (-0.025.σ - 0,25) % et Sn = (-0.05.σ - 0,25) %
   * ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,025.σ + 0,5) %
   * ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05.σ % et Sn = (0,12.σ + 0,5) %
   * ceux soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 % et 1,70 %
- pour les composants se trouvant à l'état détendu ou recristallisé à moins de 50 % :
   * ceux soumis à une contrainte de compression axiale ou travers σ comprise entre -10 et -20MPa seront réalisés en un alliage dont la teneur en éléments autre que Zr ne dépasse pas 5%, et dont la teneur en Sn est comprise entre Sn = (-0,05.σ - 0,5) % et Sn = -0,05.σ %
   * ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,05.σ + 1) %
   * ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,075.σ % et Sn = (0,07.σ + 1) %
   * ceux soumis à une contrainte de traction axiale ou travers σ comprise entre 10 et 20MPa seront réalisés en un alliage dont la teneur en éléments autres que Zr ne dépasse pas 5% et dont la teneur en Sn est comprise entre 0,75 % et 1,70 %.

De préférence :
- pour les composants se trouvant à l'état entièrement recristallisé ou recristallisé à plus de 50% :
   * au moins certains desdits composants soumis à une contrainte de traction axiale ou travers σ comprise entre 0 et +10MPa seront réalisés en un alliage dont la teneur en éléments autres que Zr ne dépasse pas 5%, et dont la teneur en Sn est comprise entre Sn = 0,05.σ% et Sn = (0,075.σ + 0,5)% ;
   * au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 et 1,25% ;
- pour les composants se trouvant à l'état détendu ou recristallisé à moins de 50% :
   * au moins certains desdits composants soumis à une contrainte de traction axiale ou travers σ comprise entre 0 et +10MPa seront réalisés en un alliage dont la teneur en éléments autres que Zr ne dépasse pas 5%, et dont la teneur en Sn est comprise entre Sn = 0,075.σ% et Sn = (0,025.σ + 1,0)% ;
   * au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,75% et 1,25%.

De préférence :
- pour les composants se trouvant à l'état entièrement recristallisé ou recristallisé à plus de 50% :
   * au moins certains de ceux soumis à une contrainte de compression axiale ou travers σ comprise entre -10 et -20MPa seront réalisés en un alliage dont la teneur en éléments autre que Zr ne dépasse pas 5%, et dont la teneur en Sn est égale à Sn = (-0,05.σ - 0,5) % ou s'écarte de la valeur ainsi calculée de ± 20% de celle-ci,
   * au moins certains de ceux soumis à une contrainte de compression axiale ou travers a comprise entre 0 et -10MPa seront réalisés en un alliage dont la teneur en éléments autres que Zr ne dépasse pas 5% et dont la teneur en Sn est ≤ 0,15% ;
   * au moins certains de ceux soumis à une contrainte de traction axiale ou travers σ comprise entre 0 et +10MPa seront réalisés en un alliage dont la teneur en éléments autres que Zr ne dépasse pas 5% et dont la teneur en Sn est égale à 0,1.σ% ou s'écarte de la valeur ainsi calculée de ±20% de celle-ci ;
   * au moins certains de ceux soumis à une contrainte de traction axiale ou travers σ comprise entre +10 et +20MPa seront réalisés en un alliage dont la teneur en éléments autres que Zr ne dépasse pas 5% et dont la teneur en Sn est égale à 1% ± 0,2% ;
- pour les composants se trouvant à l'état détendu ou recristallisé à moins de 50% :
   * au moins certains de ceux soumis à une contrainte de compression axiale ou travers σ comprise entre -10 et -20MPa seront réalisés en un alliage dont la teneur en éléments autre que Zr ne dépasse pas 5%, et dont la teneur en Sn est égale à Sn = (-0,05.σ - 0,25) % ou s'écarte de la valeur ainsi calculée de ± 20% de celle-ci,
   * au moins certains de ceux soumis à une contrainte de compression axiale ou travers σ comprise entre 0 et -10MPa seront réalisés en un alliage dont la teneur en éléments autres que Zr ne dépasse pas 5% et dont la teneur en Sn est égale à - 0,025.σ % ou s'écarte de la valeur ainsi calculée de ± 20% de celle-ci ;
   * au moins certains de ceux soumis à une contrainte de traction axiale ou travers σ comprise entre 0 et +10MPa seront réalisés en un alliage dont la teneur en éléments autres que Zr ne dépasse pas 5% et dont la teneur en Sn est égale à Sn = 0,1.σ % ou s'écarte de la valeur ainsi calculée de ±20% de celle-ci ;
   * au moins certains de ceux soumis à une contrainte de traction axiale ou travers a comprise entre +10 et +20MPa seront réalisés en un alliage dont la teneur en éléments autres que Zr ne dépasse pas 5% et dont la teneur en Sn est égale à 1% ± 0,2% ;
- lorsque lesdites valeurs calculées de la teneur en Sn sont inférieures à 0,1 %, on prend 0,15% comme limite supérieure de la teneur en Sn.

De préférence au moins certains desdits composants ont une teneur totale en éléments autres que Zr ne dépassant pas 3,5%.

Au moins certains desdits composants peuvent avoir une teneur en Nb de 0,5 à 3%.

Au moins certains desdits composants peuvent avoir une teneur en Nb de 0,5 à 3% et contiennent également du Fe et/ou du Cr et/ou du Cu et/ou du V et/ou du Ni, avec Fe+Cr+Ni+Cu+V = 0,03 à 0,5%.

Comme on l'aura compris, l'invention repose sur le raisonnement initial selon lequel la teneur en Sn de l'alliage dans lequel est réalisé un composant a une influence marquée sur ses propriétés, et le choix de cette teneur doit être effectué en fonction des sollicitations thermiques, mécaniques et physico-chimiques auxquelles le composant est appelé à être soumis lors de l'utilisation du réacteur, optimalement en tenant également compte de l'état plus ou moins rescristallisé ou détendu du composant.

L'invention sera mieux comprise à la lecture de la description qui suit, donnée en référence aux figures annexées suivantes :
- la figure 1 qui montre les teneurs en Sn minimale, maximale et préférée que, selon l'invention, on impose aux composants de l'assemblage de combustible en fonction de la contrainte axiale de traction ou de compression à laquelle ils sont soumis, dans le cas où l'alliage est à l'état recristallisé ;
- la figure 2, qui montre les teneurs en Sn minimale, maximale et préférée que, selon l'invention, on impose aux composants de l'assemblage de combustible en fonction de la contrainte axiale de traction ou de compression à laquelle ils sont soumis, dans le cas où l'alliage est à l'état détendu ;
- la figure 3, qui montre les teneurs en Sn minimale et maximale que, selon l'invention, on impose aux composants de l'assemblage de combustible en fonction de la contrainte axiale de traction ou de compression à laquelle ils sont soumis, dans le cas le plus général.

Ce qui va être dit est valable pour les alliages de Zr dont la teneur en éléments d'alliage autres que Zr ne dépasse pas 5%, de préférence ne dépasse pas 3,5%.

La teneur en Sn d'un alliage de Zr a une influence marquée à la fois sur son comportement en corrosion et sur sa résistance au fluage, qui est l'une des caractéristiques mécaniques les plus importantes à considérer pour apprécier le comportement d'un composant.

L'invention repose sur le concept selon lequel la teneur en Sn des différents composants d'un réacteur doit être optimisée pour que le composant se corrode peu et soit peu sujet à la déformation, dans les conditions précises où il sera utilisé. Cette optimisation doit ensuite être affinée grâce au choix des teneurs des autres éléments, notamment de O et S qui ont une influence importante sur le fluage et de Fe qui a une influence importante sur la corrosion. Mais Sn, qui a une influence importante sur ces deux facteurs, est l'élément le plus important à considérer lorsqu'on veut obtenir un bon compromis entre ces diverses exigences, parfois contradictoires.

Pour parvenir à leurs conclusions, les inventeurs ont réalisé une modélisation du comportement en fluage des alliages de Zr contenant au maximum 5 % d'éléments autres que Zr, en fonction :
- de la contrainte uniaxiale σ de compression ou de traction appliquée au composant considéré, dans la gamme -20MPa à +20MPa, moyennée sur la vie de l'assemblage ;
- et de la teneur en Sn de l'alliage constituant le composant, ainsi que de son état recristallisé ou détendu.

La gamme de contraintes considérée couvre largement les sollicitations uniaxiales rencontrées dans un réacteur. Au-delà de 20MPa, la sollicitation entraînerait un fluage rédhibitoire des composants.

Au cours de ces simulations, les inventeurs ont également tenu compte de l'influence de la température et des conditions physico-chimiques d'utilisation de ces alliages dans les environnements habituels des réacteurs. En particulier, il a fallu tenir compte du grandissement sous irradiation provoqué par le flux neutronique, et des contraintes causées par la formation de la couche d'oxyde suite à la corrosion du matériau. Egalement, l'hydruration, qui provoque un grandissement du matériau, et le frottement du fluide sur l'assemblage, ont été pris en compte.

Concernant les températures auxquelles sont soumis les composants, on les a considérées comme étant typiquement de 280 à 360°C pour un réacteur à eau pressurisée et de 280 à 300°C pour un réacteur à eau bouillante.

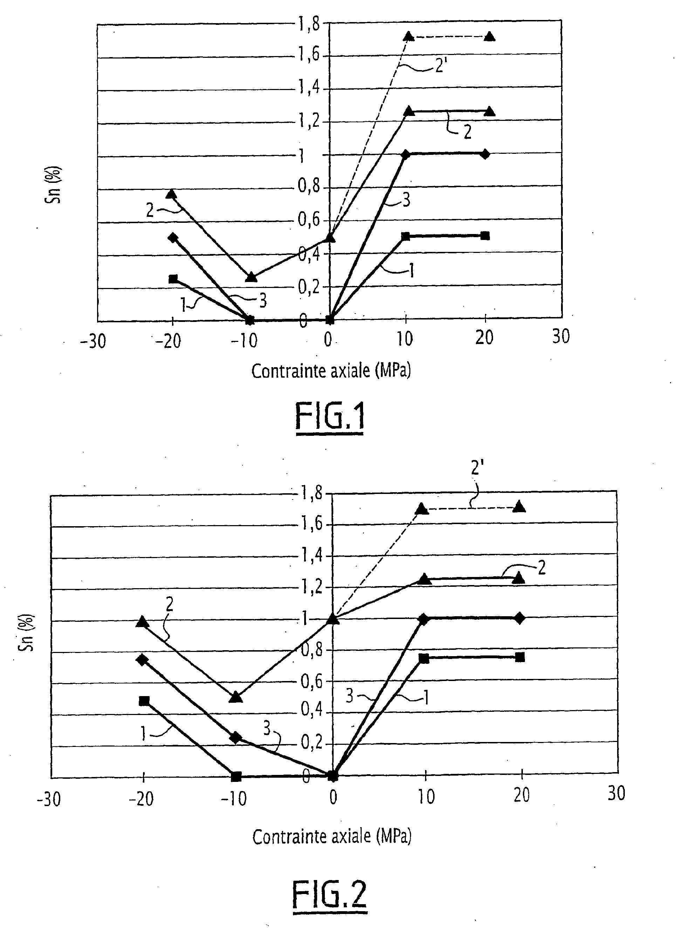

Les conclusions sont résumées par les figures 1 à 3 qui montrent la teneur en Sn qu'il est, selon l'invention, préconisé d'imposer à un composant de l'assemblage de combustible en fonction de la contrainte de traction (valeurs positives) ou de compression (valeurs négatives) à laquelle il est soumis lorsque le réacteur est en service dans ses conditions d'utilisation nominales.

En particulier, la figure 1 se rapporte aux alliages se trouvant à l'état entièrement recristallisé, et la figure 2 se rapporte aux alliages se trouvant à l'état détendu.

Sur ces figures, les courbes référencées 1 correspondent aux teneurs minimales en Sn à imposer selon l'invention. Les courbes 2 correspondent aux teneurs maximales en Sn à imposer selon l'invention lorsqu'une résistance élevée du composant à la corrosion et à l'hydruration est recherchée ; les courbes 2' correspondent à une variante des courbes 2 correspondent au cas où une résistance élevée du composant à la corrosion et à l'hydruration n'est pas particulièrement recherchée. Les courbes 3 correspondent aux teneurs en Sn considérées comme optimales.

Dans la perspective de l'invention, les inventeurs pensent qu'il est généralement préférable d'imposer aux alliages utilisés une teneur en Sn de 1,25% au maximum, car au-delà la corrosion et l'hydruration deviennent trop rapides pour certaines conditions d'utilisation. Il est cependant envisageable de mêler dans l'assemblage de combustible, des composants à Sn ≤ 1,25% dans les zones les plus exposées à la corrosion et à l'hydruration et des composants à Sn > 1,25% dans les zones les moins exposées à la corrosion et à l'hydruration. 1,70% de Sn apparaît comme la teneur à ne dépasser dans aucun cas. De même, il demeurerait conforme à l'invention d'utiliser conjointement dans l'assemblage des éléments dont la composition a été choisie selon les critères optimaux qui vont être définis et des éléments ne répondant pas à ces critères optimaux, mais à des critères moins exigeants relevant également de l'invention.

La contrainte uniaxiale dont il est question peut être une contrainte longitudinale (axiale) de compression ou de traction, comme c'est le cas sur les tubes-guides, les gaines et les boîtiers, ou une contrainte travers de compression ou de traction, comme c'est le cas sur les grilles.

Concernant les alliages à l'état entièrement recristallisé (fig.1) les critères de choix préférentiels sont les suivants, appliqués à des alliages dont la teneur totale en éléments autres que Zr ne dépasse pas 5%, de préférence 3,5%.

Lorsque le composant est soumis à une contrainte de compression axiale ou travers σ comprise entre -10 et -20MPa, la teneur en Sn est comprise entre Sn = (-0,025. σ - 0,25)% et Sn = (-0,05. σ -0,25)%. Optimalement, elle est égale à Sn = (-0,05. σ - 0,5)% ou s'écarte de la valeur ainsi définie de ± 20% de celle-ci. Si la valeur trouvée par ce calcul de la teneur en Sn est inférieure à 0,10%, on prend 0,15% comme limite supérieure optimale de la teneur en Sn.

Lorsque le composant est soumis à une contrainte de compression axiale ou travers σ comprise entre -10 et 0 MPa, la teneur en Sn est comprise entre des traces et Sn = (0,025.σ + 0,5)%. Optimalement, on a Sn ≤ 0,15%.

Lorsque le composant est soumis à une contrainte de traction axiale ou travers σ comprise entre 0 et +10 MPa, la teneur en Sn est comprise entre Sn = 0,05. σ% et Sn = (0,12. σ + 0,5)% lorsqu'une résistance à la corrosion élevée n'est pas particulièrement recherchée, ou entre Sn = 0,05. σ% et Sn = (0,075. σ + 0,5)% lorsqu'une résistance à la corrosion élevée est recherchée. Optimalement, elle est égale à 0,1.σ% ou s'écarte de la valeur ainsi calculée de ± 20% de celle-ci. Si cette valeur calculée est inférieure à 0,1%, on prend 0,15% comme limite supérieure optimale de la teneur en Sn.

Lorsque le composant est soumis à une contrainte de traction axiale ou travers σ comprise entre +10 et +20 MPa, la teneur en Sn est comprise entre 0,50% et 1,70% lorsqu'une résistance à la corrosion élevée n'est pas particulièrement recherchée, ou entre 0,50 et 1,25% lorsqu'une résistance à la corrosion élevée est recherchée. Optimalement, elle est égale à 1% ± 0,2%.

Concernant les alliages à l'état détendu (fig.2), les critères de choix préférentiels sont les suivants, appliqués à des alliages dont la teneur totale en éléments autres que Zr ne dépasse pas 5%, de préférence ne dépasse pas 3,5%.

Lorsque le composant est soumis à une contrainte de compression axiale ou travers σ comprise entre -10 et -20 MPa, la teneur en Sn est comprise entre Sn = (-0,05.σ - 0,5)% et Sn = -0,05.σ%. Optimalement elle est égale à Sn = (-0,05.σ - 0,25)% ou s'écarte de la valeur ainsi définie de ± 20% de celle-ci.

Lorsque le composant est soumis à une contrainte de compression axiale ou travers σ comprise entre -10 et 0 MPa, la teneur en Sn est comprise entre Sn = traces et Sn = (0,05.σ + 1)%. Optimalement, elle est égale à Sn = - 0,025.σ% ou s'écarte de la valeur ainsi définie de ± 20% de celle-ci. Si la valeur trouvée par ce calcul est inférieure à 0,1%, on prend 0,15% comme limite supérieure optimale de la teneur en Sn.

Lorsque le composant est soumis à une contrainte de traction axiale ou travers σ comprise entre 0 et +10 MPa, la teneur en Sn est comprise entre Sn = 0,075.σ% et Sn = (0,07.σ + 1)% lorsqu'une résistance à la corrosion élevée n'est pas particulièrement recherchée, et entre Sn = 0,075.σ% et Sn = (0,025. σ + 1)% lorsqu'une résistance à la corrosion élevée est recherchée. Optimalement, elle est égale à Sn = 0,1.σ% ou s'écarte de cette valeur de ± 20% de celle-ci. Si cette valeur calculée est inférieure à 0,1%, on prend 0,15% comme limite supérieure optimale de la teneur en Sn.

Lorsque le composant est soumis à une contrainte de traction axiale ou travers σ comprise entre +10 et +20 MPa, la teneur en Sn est comprise entre 0,75 et 1,70% si une résistance élevée à la corrosion n'est pas particulièrement recherchée, ou entre 0,75% et 1,25% si une résistance élevée à la corrosion est recherchée. Optimalement la teneur en Sn est égale à 1% ± 0,2%.

Lorsque l'alliage est dans un état partiellement recristallisé, on peut lui conférer, pour une contrainte de compression ou de traction axiale donnée, une valeur intermédiaire entre celle définie comme précédemment pour un alliage entièrement recristallisé et celle définie pour un alliage à l'état détendu. En première approximation, on pourra assimiler un alliage recristallisé à plus de 50% à un alliage entièrement recristallisé, et un alliage recristallisé à moins de 50% à un alliage détendu.

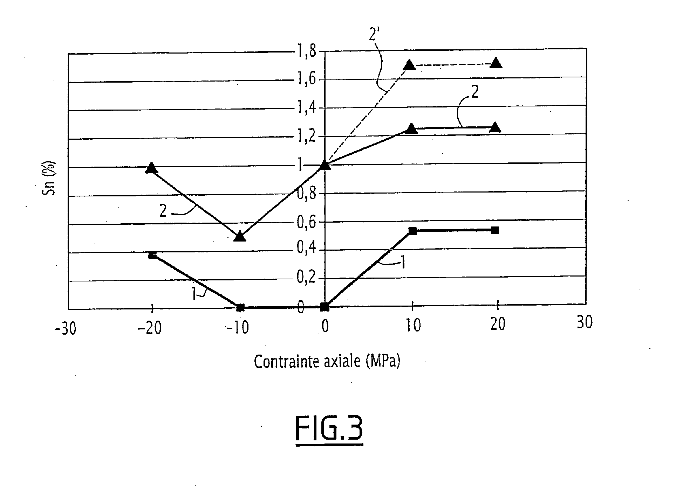

De cette façon, en réunissant les deux domaines préférentiels précédents, on conclut que selon la définition la plus large de l'invention, on peut définir le choix de la teneur en Sn des composants selon les critères suivants, comme le montre la figure 3.

Pour des composants soumis à une contrainte de compression axiale ou travers σ comprise entre -20 et -10MPa, la teneur en Sn est comprise entre Sn = (-0,025.σ - 0,25)% (courbe 1 de la figure 1) et Sn = -0,05.σ% (courbe 2 de la figure 2).

Pour des composants soumis à une contrainte de compression axiale ou travers σ comprise entre -10 et 0MPa, la teneur en Sn est comprise entre Sn = traces (courbe 1 de la figure 1) et Sn = (0,05.σ + 1)% (courbe 2 de la figure 2).

Pour des composants soumis à une contrainte de traction axiale ou travers σ comprise entre 0 et +10MPa, la teneur en Sn est comprise entre Sn = 0,05.σ% (courbe 1 de la figure 1) et Sn = (0,07.σ + 1)% (courbe 2' de la figure 2) lorsqu'une résistance à la corrosion élevée du composant n'est pas particulièrement recherchée, ou entre Sn = 0,05.σ% (courbe 1 de la figure 1) et Sn = (0,025.σ + 1)% (courbe 2 de la figure 2) lorsqu'une résistance à la corrosion élevée du composant est recherchée.

Pour des composants soumis à une contrainte de traction axiale ou travers σ comprise entre +10 et +20MPa, la teneur en Sn est comprise entre 0,50% (courbe 1 de la figure 1) et 1,70% (courbe 2' de la figure 2) lorsqu'une résistance à la corrosion élevée au composant n'est pas particulièrement recherchée et entre 0,50% (courbe 1 de la figure 1) et 1,25% (courbe 2 de la figure 2) lorsqu'une résistance à la corrosion élevée du composant est recherchée.

Ainsi, dans tous les cas, en l'absence de contrainte uniaxiale de traction ou de compression axiale ou travers, la teneur optimale en Sn est au maximum de 0,15%, et peut descendre jusqu'à de simples traces à titre d'impuretés résultant de l'élaboration de l'alliage.

De manière générale, la teneur en Sn optimale est plus élevée dans les états détendus que dans les états recristallisés, du fait de la vitesse de fluage plus importante.

L'invention s'applique, comme on l'a dit, aux alliages de Zr contenant jusqu'à 5% (mieux, jusqu'à 3,5%) d'éléments d'alliage autres que Zr. En particulier, les alliages contenant entre 0,5 et 3% de Nb en sont des exemples privilégiés, de même que les alliages contenant de 0,5 à 3% de Nb et également du Fe et/ou du Cr et/ou du Cu et/ou du V et/ou du Ni, avec Fr+Cr+Ni+Cu+V= 0,03 à 0,5%.

## Revendications

1. Procédé de conception d'un assemblage de combustible pour réacteur nucléaire à eau légère comportant des composants de structure en alliage de zirconium, **caractérisé en ce que** :
- on calcule les contraintes uniaxiales moyennes de traction ou de compression auxquelles seront soumis lesdits composants pendant la vie de l'assemblage ;
- et on choisit les alliages de zirconium dans lesquels lesdits composants seront réalisés selon le critère suivant :
* ceux soumis à une contrainte de compression axiale ou travers σ comprise entre -10 et -20MPa seront réalisés en un alliage dont la teneur en éléments autres que Zr ne dépasse pas 5%, et dont la teneur en Sn est comprise entre Sn = (-0,025.σ - 0,25) % et Sn = -0,05.σ %
* ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,05.σ + 1) %
* ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05.σ % et Sn = (0,07.σ + 1) %
* ceux soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 % et 1,70 %.

2. Procédé selon la revendication 1, **caractérisé en ce que** :
- au moins certains desdits composants soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05. σ% et Sn = (0,025. σ + 1)% ;
- au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50% et 1,25%.

3. Procédé selon la revendication 1, **caractérisé en ce que** lesdits alliages de zirconium dans lesquels lesdits composants seront réalisés selon les critères suivants :
- pour les composants se trouvant à l'état entièrement recristallisé, ou recristallisé à plus de 50% :
* ceux soumis à une contrainte de compression axiale ou travers σ comprise entre -10 et -20MPa seront réalisés en un alliage dont la teneur en éléments autre que Zr ne dépasse pas 5%, et dont la teneur en Sn est comprise entre Sn = (-0,025.σ - 0,25) % et Sn = (-0,05.σ - 0,25) %
* ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,025.σ + 0,5) %
* ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,05.σ % et Sn = (0,12.σ + 0,5) %
* ceux soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 % et 1,70 %
- pour les composants se trouvant à l'état détendu ou recristallisé à moins de 50 % :
* ceux soumis à une contrainte de compression axiale ou travers σ comprise entre -10 et -20MPa seront réalisés en un alliage dont la teneur en éléments autre que Zr ne dépasse pas 5%, et dont la teneur en Sn est comprise entre Sn = (-0,05.σ - 0,5) % et Sn = -0,05.σ %
* ceux soumis à une contrainte de compression axiale ou travers σ comprise entre 0 et -10MPa seront réalisés en un alliage dont la teneur en éléments autres que Zr ne dépasse pas 5% et dont la teneur en Sn est comprise entre Sn = traces et Sn = (0,05.σ + 1) %
* ceux soumis à une contrainte de traction axiale ou travers σ comprise entre 0 et +10MPa seront réalisés en un alliage dont la teneur en éléments autres que Zr ne dépasse pas 5% et dont la teneur en Sn est comprise entre Sn = 0,075.σ % et Sn = (0,07.σ + 1) %
* ceux soumis à une contrainte de traction axiale ou travers σ comprise entre 10 et 20MPa seront réalisés en un alliage dont la teneur en éléments autres que Zr ne dépasse pas 5% et dont la teneur en Sn est comprise entre 0,75 % et 1,70 %.

4. Procédé selon la revendication 3, **caractérisé en ce que** :
- pour les composants se trouvant à l'état entièrement recristallisé ou recristallisé à plus de 50% :
* au moins certains desdits composants soumis à une contrainte de traction axiale ou travers σ comprise entre 0 et +10MPa seront réalisés en un alliage dont la teneur en éléments autres que Zr ne dépasse pas 5%, et dont la teneur en Sn est comprise entre Sn = 0,05.σ% et Sn = (0,075.σ + 0,5)% ;
* au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,50 et 1,25% ;
- pour les composants se trouvant à l'état détendu ou recristallisé à moins de 50% :
* au moins certains desdits composants soumis à une contrainte de traction axiale ou travers σ comprise entre 0 et +10MPa seront réalisés en un alliage dont la teneur en éléments autres que Zr ne dépasse pas 5%, et dont la teneur en Sn est comprise entre Sn = 0,075.σ% et Sn = (0,025.σ + 1)% ;
* au moins certains desdits composants soumis à une contrainte de traction axiale ou travers σ comprise entre +10 et +20MPa seront réalisés en un alliage dont la teneur en éléments autres que Zr ne dépasse pas 5% et dont la teneur en Sn est comprise entre 0,75% et 1,25%.

5. Procédé selon la revendication 4, **caractérisé en ce que** :
- pour les composants se trouvant à l'état entièrement recristallisé ou recristallisé à plus de 50% :
* au moins certains de ceux soumis à une contrainte de compression axiale ou travers σ comprise entre -10 et -20MPa seront réalisés en un alliage dont la teneur en éléments autre que Zr ne dépasse pas 5%, et dont la teneur en Sn est égale à Sn = (-0,05.σ - 0,5) % ou s'écarte de la valeur ainsi calculée de ± 20% de celle-ci,
* au moins certains de ceux soumis à une contrainte de compression axiale ou travers σ comprise entre 0 et -10MPa seront réalisés en un alliage dont la teneur en éléments autres que Zr ne dépasse pas 5% et dont la teneur en Sn est ≤ 0,15% ;
* au moins certains de ceux soumis à une contrainte de traction axiale ou travers σ comprise entre 0 et +10MPa seront réalisés en un alliage dont la teneur en éléments autres que Zr ne dépasse pas 5% et dont la teneur en Sn est égale à 0,1.σ% ou s'écarte de la valeur ainsi calculée de ±20% de celle-ci ;
* au moins certains de ceux soumis à une contrainte de traction axiale ou travers σ comprise entre +10 et +20MPa seront réalisés en un alliage dont la teneur en éléments autres que Zr ne dépasse pas 5% et dont la teneur en Sn est égale à 1% ± 0,2% ;
- pour les composants se trouvant à l'état détendu ou recristallisé à moins de 50% :
* au moins certains de ceux soumis à une contrainte de compression axiale ou travers σ comprise entre -10 et -20MPa seront réalisés en un alliage dont la teneur en éléments autre que Zr ne dépasse pas 5%, et dont la teneur en Sn est égale à Sn = (-0,05.σ - 0,25) % ou s'écarte de la valeur ainsi calculée de ± 20% de celle-ci,
* au moins certains de ceux soumis à une contrainte de compression axiale ou travers σ comprise entre 0 et -10MPa seront réalisés en un alliage dont la teneur en éléments autres que Zr ne dépasse pas 5% et dont la teneur en Sn est égale à - 0,025.σ % ou s'écarte de la valeur ainsi calculée de ± 20% de celle-ci ;
* au moins certains de ceux soumis à une contrainte de traction axiale ou travers σ comprise entre 0 et +10MPa seront réalisés en un alliage dont la teneur en éléments autres que Zr ne dépasse pas 5% et dont la teneur en Sn est égale à Sn = 0,1.σ % ou s'écarte de la valeur ainsi calculée de ±20% de celle-ci ;
* au moins certains de ceux soumis à une contrainte de traction axiale ou travers σ comprise entre +10 et +20MPa seront réalisés en un alliage dont la teneur en éléments autres que Zr ne dépasse pas 5% et dont la teneur en Sn est égale à 1 % ± 0,2% ;
- lorsque lesdites valeurs calculées de la teneur en Sn sont inférieures à 0,1%, on prend 0,15% comme limite supérieure de la teneur en Sn.

6. Procédé selon l'une des revendications 1 à 5, **caractérisé en ce que** au moins certains desdits composants ont une teneur totale en éléments autres que Zr ne dépassant pas 3,5%.

7. Procédé selon l'une des revendications 1 à 6, **caractérisé en ce que** au moins certains desdits composants ont une teneur en Nb de 0,5 à 3%.

8. Procédé selon la revendication 7, **caractérisé en ce que** au moins certains desdits composants ont une teneur en Nb de 0,5 à 3% et contiennent également du Fe et/ou du Cr et/ou du Cu et/ou du V et/ou du Ni, avec Fe+Cr+Ni+Cu+V = 0,03 à 0,5%.

## Patentansprüche

1. Verfahren zur Planung einer Brennstoffzusammenstellung für einen Leichtwasser-Kernreaktor, der Bestandteile aus einer Zirkoniumlegierung aufweist, **dadurch gekennzeichnet, dass**:
- die mittleren einachsigen Zug- und Druckspannungen berechnet werden, denen die Bestandteile während der Lebensdauer der Zusammenstellung unterworfen sind;
- und Zirkoniumlegierungen gewählt werden, aus denen die Bestandteile gemäß dem folgenden Kriterium hergestellt werden:
* solche, die einer Axial- oder Querdruckspannung σ zwischen -10 und -20 MPa unterworfen sind, werden aus einer Legierung hergestellt, deren Gehalt an anderen Elementen als Zr nicht 5% überschreitet und deren Gehalt an Sn zwischen Sn = (-0,025·σ-0,25)% und Sn = -0,05·σ % liegt
* solche, die einer Axial- oder Querdruckspannung σ zwischen 0 und -10 MPa unterworfen sind, werden aus einer Legierung hergestellt, deren Gehalt an anderen Elementen als Zr nicht 5% überschreitet und deren Gehalt an Sn zwischen Sn = Spuren und Sn = (0,05.σ + 1) % liegt
* solche, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt an Sn zwischen Sn = 0,05.σ % und Sn = 0,07·σ + 1)% liegt
* solche, die einer Axial- oder Querdruckspannung σ zwischen +10 und +20 MPa unterworfen sind, werden aus einer Legierung hergestellt, deren Gehalt an anderen Elementen als Zr nicht 5% überschreitet und deren Gehalt an Sn zwischen 0,50% und 1,70% liegt.

2. Verfahren nach Anspruch 1, **dadurch gekennzeichnet, dass**:
- mindestens einige der Bauteile, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt an Sn zwischen Sn = 0,05·σ% und Sn = (0,025·σ+1)% liegt;
- mindestens einige der Bauteile, die einer Axial- oder Querdruckspannung σ zwischen +10 und +20 MPa werden aus einer Legierung hergestellt, deren Gehalt an anderen Elementen als Zr nicht 5% überschreitet und deren Gehalt Sn zwischen 0,50% und 1,25% liegt.

3. Verfahren nach Anspruch 1, **dadurch gekennzeichnet, dass** die Zirkoniumlegierungen, aus denen die Bestandteile nach den folgenden Kriterien hergestellt werden:
- für die Komponenten, die sich im vollständig rekristallisierten Zustand oder im mit mehr als 50% rekristallisierten Zustand befinden:
* solche, die einer Axial- oder Querdruckspannung σ zwischen -10 und -20 MPa unterworfen sind, werden aus einer Legierung hergestellt, deren Gehalt an anderen Elementen als Zr nicht 5% überschreitet und deren Gehalt an Sn zwischen Sn = (-0,025·σ-0,25)% und Sn =(-0,05·σ-0,25)% liegt
* solche, die einer Axial- oder Querdruckspannung σ zwischen 0 und -10 MPa unterworfen sind, werden aus einer Legierung hergestellt, deren Gehalt an anderen Elementen als Zr nicht 5% überschreitet und deren Gehalt an Sn zwischen Sn = Spuren und Sn =(0,025·σ+0,5)% liegt
* solche, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt an Sn zwischen Sn = 0,05·σ% und Sn =(0,12·σ+0,5)% liegt
* solche, die einer Axial- oder Querdruckspannung σ zwischen +10 und +20 MPa unterworfen sind, werden aus einer Legierung hergestellt, deren Gehalt an anderen Elementen als Zr nicht 5% überschreitet und deren Gehalt an Sn zwischen 0,50% und 1,70% liegt
- für die Bestandteile, die sich im entspannten Zustand oder im mit weniger als 50% rekristallisierten Zustand befinden:
* solche, die einer Axial- oder Querdruckspannung σ zwischen -10 und -20 MPa unterworfen sind, werden aus einer Legierung hergestellt, deren Gehalt an anderen Elementen als Zr nicht 5% überschreitet und deren Gehalt an Sn zwischen Sn = (-0,05·σ-0,5)% und Sn = -0,05·σ% liegt
* solche, die einer Axial- oder Querdruckspannung σ zwischen 0 und -10 MPa unterworfen sind, werden aus einer Legierung hergestellt, deren Gehalt an anderen Elementen als Zr nicht 5% überschreitet und deren Gehalt an Sn zwischen Sn = Spuren und Sn = (0,05·σ+1)% liegt
* solche, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt an Sn zwischen Sn = 0,075·σ% und Sn = (0,07·σ+1)% liegt
* solche, die einer Axial- oder Querdruckspannung σ zwischen 10 und 20 MPa unterworfen sind, werden aus einer Legierung hergestellt, deren Gehalt an anderen Elementen als Zr nicht 5% überschreitet und deren Gehalt an Sn zwischen 0,75% und 1,70% liegt.

4. Verfahren nach Anspruch 3, **dadurch gekennzeichnet, dass**:
- für die Bestandteile, die sich im vollständig rekristallisierten Zustand oder im mit mehr als 50% rekristallisierten Zustand befinden:
* mindestens einige der Bauteile, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt Sn zwischen Sn = 0,05·σ% und Sn = (0,075·σ+0,5)% liegt;
* mindestens einige der Bestandteile, die einer Axial- oder Querdruckspannung σ zwischen +10 und +20 MPa werden unterworfen sind, aus einer Legierung hergestellt, deren Gehalt an anderen Elementen als Zr nicht 5% überschreitet und deren Gehalt an Sn zwischen 0,50% und 1,25% liegt;
- für die Bestandteile, die sich im entspannten Zustand oder im mit weniger als 50% rekristallisierten Zustand befinden:
* mindestens einige der Bauteile, die einer Axial- oder Querdruckspannung σ zwischen 0 und +10 MPa unterworfen sind, werden aus einer Legierung hergestellt, deren Gehalt an anderen Elementen als Zr nicht 5% überschreitet und deren Gehalt an Sn zwischen Sn = 0,075·σ% und Sn = (0,025·σ+1)% liegt;
* mindestens einige der Bestandteile, die einer Axial- oder Querdruckspannung σ zwischen +10 und +20 MPa unterworfen sind, werden aus einer Legierung hergestellt, deren Gehalt an anderen Elementen als Zr nicht 5% überschreitet und deren Gehalt an Sn zwischen 0,75% und 1,25% liegt;

5. Verfahren nach Anspruch 4, **dadurch gekennzeichnet, dass**:
- für die Bestandteile, die sich im vollständig rekristallisierten Zustand oder im mehr als 50% rekristallisierten Zustand befinden:
* mindestens einige von ihnen, die einer Axial- oder Querdruckkraft σ zwischen -10 und -20 MPa unterworfen sind, werden aus einer Legierung hergestellt, deren Gehalt an anderen Elementen als Zr nicht 5% überschreitet und deren Gehalt an Sn gleich Sn = (-0,05·σ-0,25)% ist oder sich von dem so berechneten Wert um ±20% desselben entfernt,
* mindestens einige von ihnen, die einer Axial- oder Querdruckkraft σ zwischen 0 und -10 MPa unterworfen sind, werden aus einer Legierung hergestellt, deren Gehalt an anderen Elementen als Zr nicht 5% überschreitet und deren Gehalt an Sn gleich ≤ 0,15% ist;
* mindestens einige von ihnen, die einer Axial- oder Querdruckkraft σ zwischen 0 und +10 MPa unterworfen sind, werden aus einer Legierung hergestellt, deren Gehalt an anderen Elementen als Zr nicht 5% überschreitet und deren Gehalt an Sn gleich 0,1·σ% ist oder sich von dem so berechneten Wert um ±20% desselben entfernt;
* mindestens einige von ihnen, die einer Axial- oder Querdruckkraft σ zwischen +10 und +20 MPa unterworfen sind, werden aus einer Legierung hergestellt, deren Gehalt an anderen Elementen als Zr nicht 5% überschreitet und deren Gehalt an Sn gleich 1%±0,2% ist;
- für die Bestandteile, die sich im entspannten Zustand oder im mit weniger als 50% rekristallisierten Zustand befinden:
* mindestens einige von ihnen, die einer Axial- oder Querdruckkraft σ zwischen -10 und -20 MPa unterworfen sind, werden aus einer Legierung hergestellt, deren Gehalt an anderen Elementen als Zr nicht 5% überschreitet und deren Gehalt an Sn gleich Sn = (-0,05·σ-0,25)% ist oder sich von dem so berechneten Wert um ±20% desselben entfernt,
* mindestens einige von ihnen, die einer Axial- oder Querdruckkraft σ zwischen 0 und -10 MPa unterworfen sind, werden aus einer Legierung hergestellt, deren Gehalt an anderen Elementen als Zr nicht 5% überschreitet und deren Gehalt an Sn gleich -0,025·σ% ist oder sich von dem so berechneten Wert um ±20% desselben entfernt,
* mindestens einige von ihnen, die einer Axial- oder Querdruckkraft σ zwischen 0 und +10 MPa unterworfen sind, werden aus einer Legierung hergestellt, deren Gehalt an anderen Elementen als Zr nicht 5% überschreitet und deren Gehalt an Sn gleich Sn = 0,1.σ% ist oder sich von dem so berechneten Wert um ±20% desselben entfernt,
* mindestens einige von ihnen, die einer Axial- oder Querdruckkraft σ zwischen +10 und +20 MPa unterworfen sind, werden aus einer Legierung hergestellt, deren Gehalt an anderen Elementen als Zr nicht 5% überschreitet und deren Gehalt an Sn gleich 1%±0,2% ist,
- wenn die berechneten Werte des Gehalts an Sn kleiner als 0,1% sind, wird 0,15% als obere Grenze des Gehalts an Sn genommen.

6. Verfahren nach einem der Ansprüche 1 bis 5, **dadurch gekennzeichnet, dass** mindestens einige der Bestandteile einen Gesamtgehalt an anderen Elementen als Zr haben, der nicht 3,5% überschreitet.

7. Verfahren nach einem der Ansprüche 1 bis 6, **dadurch gekennzeichnet, dass** mindestens einige der Bestandteile einen Gehalt an Nb von 0,5 bis 3% haben.

8. Verfahren nach Anspruch 7, **dadurch gekennzeichnet, dass** mindestens einige der Bestandteile einen Gehalt an Nb von 0,5 und 3% haben und gleichfalls Fe und/oder Cr und/oder Cu und/oder V und/oder Ni mit Fe+Cr+Ni+Cu+V = 0,03 bis 0,5% enthalten.

## Claims

1. Method for designing a fuel assembly for a light-water nuclear reactor comprising structural components made of zirconium alloy, **characterized in that**:
- the average uniaxial tensile or compressive stresses to which said components will be subjected during the lifetime of the assembly are calculated;
- and the zirconium alloys from which said components will be produced are chosen according to the following criterion:
* components subjected to an axial or transverse compressive stress σ of from -10 to -20 MPa will be produced from an alloy whose content of elements other than Zr does not exceed 5% and whose Sn content is from Sn = (-0.025.σ - 0.25)% to Sn = -0.05.σ%;
* components subjected to an axial or transverse compressive stress σ of from 0 to -10 MPa will be produced from an alloy whose content of elements other than Zr does not exceed 5% and whose Sn content is from Sn = traces to Sn = (0.05.σ + 1)%;
* components subjected to an axial or transverse tensile stress σ of from 0 to +10 MPa will be produced from an alloy whose content of elements other than Zr does not exceed 5% and whose Sn content is from Sn = 0.05.σ% to Sn = (0.07.σ + 1)%;
* components subjected to an axial or transverse tensile stress σ of from +10 to +20 MPa will be produced from an alloy whose content of elements other than Zr does not exceed 5% and whose Sn content is from 0.05% to 1.70%.

2. Method according to claim 1, **characterized in that**:
- at least some of said components subjected to an axial or transverse tensile stress σ of from 0 to +10 MPa will be produced from an alloy whose content of elements other than Zr does not exceed 5% and whose Sn content is from Sn = 0.05.σ% to Sn = (0.025.σ + 1)%;
- at least some of said components subjected to an axial or transverse tensile stress σ of from +10 to +20 MPa will be produced from an alloy whose content of elements other than Zr does not exceed 5% and whose Sn content is from 0.50% to 1.25%.

3. Method according to claim 1, **characterized in that** said zirconium alloys from which said components will be produced according to the following criteria:
- for components that are in the wholly recrystallized state or that are recrystallized to the extent of more than 50%:
* components subjected to an axial or transverse compressive stress σ of from -10 to -20 MPa will be produced from an alloy whose content of elements other than Zr does not exceed 5% and whose Sn content is from Sn = (-0.025.σ - 0.25)% to Sn = -0.05.σ - 0.25)%;
* components subjected to an axial or transverse compressive stress σ of from 0 to -10 MPa will be produced from an alloy whose content of elements other than Zr does not exceed 5% and whose Sn content is from Sn = traces to Sn = (0.025.σ + 0.5)%;
* components subjected to an axial or transverse tensile stress σ of from 0 to +10 MPa will be produced from an alloy whose content of elements other than Zr does not exceed 5% and whose Sn content is from Sn = 0.05.σ% to Sn = (0.12.σ + 0.5)%;
* components subjected to an axial or transverse tensile stress σ of from +10 to +20 MPa will be produced from an alloy whose content of elements other than Zr does not exceed 5% and whose Sn content is from 0.50% to 1.70%;
- for components that are in the relaxed state or that are recrystallized to the extent of less than 50%:
* components subjected to an axial or transverse compressive stress σ of from -10 to -20 MPa will be produced from an alloy whose content of elements other than Zr does not exceed 5% and whose Sn content is from Sn = (-0.05.σ - 0.5)% to Sn = -0.05.σ%;
* components subjected to an axial or transverse compressive stress σ of from 0 to -10 MPa will be produced from an alloy whose content of elements other than Zr does not exceed 5% and whose Sn content is from Sn = traces to Sn = (0.05.σ + 1)%;
* components subjected to an axial or transverse tensile stress σ of from 0 to +10 MPa will be produced from an alloy whose content of elements other than Zr does not exceed 5% and whose Sn content is from Sn = 0.075.σ% to Sn = (0.07.σ + 1)%;
* components subjected to an axial or transverse tensile stress σ of from 10 to 20 MPa will be produced from an alloy whose content of elements other than Zr does not exceed 5% and whose Sn content is from 0.75% to 1.70%.

4. Method according to claim 3, **characterized in that**:
- for components that are in the wholly recrystallized state or that are recrystallized to the extent of more than 50%:
* at least some of said components subjected to an axial or transverse tensile stress σ of from 0 to +10 MPa will be produced from an alloy whose content of elements other than Zr does not exceed 5% and whose Sn content is from Sn = 0.05.σ% to Sn = (0.075.σ + 0.5)%;
* at least some of said components subjected to an axial or transverse tensile stress σ of from +10 to +20 MPa will be produced from an alloy whose content of elements other than Zr does not exceed 5% and whose Sn content is from 0.50 to 1.25%;
- for components that are in the relaxed state or that are recrystallized to the extent of less than 50%:
* at least some of said components subjected to an axial or transverse tensile stress σ of from 0 to +10 MPa will be produced from an alloy whose content of elements other than Zr does not exceed 5% and whose Sn content is from Sn = 0.075.σ% to Sn = (0.025.σ + 1.0)%;
* at least some of said components subjected to an axial or transverse tensile stress σ of from +10 to +20 MPa will be produced from an alloy whose content of elements other than Zr does not exceed 5% and whose Sn content is from 0.75% to 1.25%.

5. Method according to claim 4, **characterized in that**:
- for components that are in the wholly recrystallized state or that are recrystallized to the extent of more than 50%:
* at least some of the components subjected to an axial or transverse compressive stress σ of from -10 to -20 MPa will be produced from an alloy whose content of elements other than Zr does not exceed 5% and whose Sn content is equal to Sn = (-0.05.σ - 0.5)% or differs from the value so calculated by ± 20% thereof;
* at least some of the components subjected to an axial or transverse compressive stress σ of from 0 to -10 MPa will be produced from an alloy whose content of elements other than Zr does not exceed 5% and whose Sn content is ≤ 0.15%;
* at least some the components subjected to an axial or transverse tensile stress σ of from 0 to +10 MPa will be produced from an alloy whose content of elements other than Zr does not exceed 5% and whose Sn content is equal to Sn = 0.1.σ% or differs from the value so calculated by ± 20% thereof;
* at least some of the components subjected to an axial or transverse tensile stress σ of from +10 to +20 MPa will be produced from an alloy whose content of elements other than Zr does not exceed 5% and whose Sn content is equal to 1 % ± 0.2%;
- for components that are in the relaxed state or that are recrystallized to the extent of less than 50%:
* at least some of the components subjected to an axial or transverse compressive stress σ of from -10 to -20 MPa will be produced from an alloy whose content of elements other than Zr does not exceed 5% and whose Sn content is equal to Sn = (-0.05.σ - 0.25)% or differs from the value so calculated by ± 20% thereof;
* at least some of the components subjected to an axial or transverse compressive stress σ of from 0 to -10 MPa will be produced from an alloy whose content of elements other than Zr does not exceed 5% and whose Sn content is equal to -0.025.σ% or differs from the value so calculated by ± 20% thereof;
* at least some of the components subjected to an axial or transverse tensile stress σ of from 0 to +10 MPa will be produced from an alloy whose content of elements other than Zr does not exceed 5% and whose Sn content is equal to Sn = 0.1.σ% or differs from the value so calculated by ± 20% thereof;
* at least some of the components subjected to an axial or transverse tensile stress σ of from +10 to +20 MPa will be produced from an alloy whose content of elements other than Zr does not exceed 5% and whose Sn content is equal to 1 % ± 0.2%;
- when said calculated values of the Sn content are less than 0.1%, 0.15% is taken as the upper limit of the Sn content.

6. Method according to any one of claims 1 to 5, **characterized in that** at least some of said components have a total content of elements other than Zr that does not exceed 3.5%.

7. Method according to any one of claims 1 to 6, **characterized in that** at least some of said components have an Nb content of from 0.5 to 3%.

8. Method according to claim 7, **characterized in that** at least some of said components have an Nb content of from 0.5 to 3% and also contain Fe and/or Cr and/or Cu and/or V and/or Ni, where Fe+Cr+Ni+Cu+V = from 0.03 to 0.5%.
